# EUROPEAN PATENT APPLICATION

(11) **EP 2 543 577 A1**
(43) Date of publication of application: **09.01.2013**
(21) Application number: 12186894.7
(22) Date of filing: 29.08.2008
(51) Int. Cl.: B62J 1/16, B62J 11/00

(54) **Device for fixing a child seat to the frame of a two-wheeled vehicle**

(62) Divisional of application: 08425580.1
(71) Applicant: Bellelli S.R.L., 45021 Badia Polesine RO (IT)
(72) Inventor: Bellelli, Tiziano, 45020 Giacciano con Baruchella (RO) (IT)
(74) Representative: Brunacci, Marco

(57) **Abstract**

The device (1) for fixing a child seat to the frame (T) of a two-wheeled vehicle or the like, the frame (T) having at least one first substantially vertical tubular element (T1), comprises:
- a plate (2) that can be associated with the first tubular element (T1) and is adapted to support a child seat;
- at least one fixing element (6, 7), which forms a substantially open profile that can be associated with the plate (2) in order to form a region for accommodating (8, 9) the first tubular element (T1) which is interposed between the fixing element (6, 7) and the plate (2), removable fastening means being provided for fastening the fixing element (6, 7) to the plate (2) to lock the plate (2) with respect to the frame (T); the fixing element (6, 7) having at least one substantially wire-like portion at the accommodation region (8, 9); and
- means for adjusting the position of the fixing element (6, 7) with respect to the plate (2).

## Description

The present invention relates to a device for fixing a child seat to the frame of a two-wheeled vehicle or the like.

Currently, child seats are generally fixed to the frame of a two-wheeled vehicle, such as a bicycle or the like, by way of fixing means that anchor such seat to the handlebar or to the vertical tubular element of the frame that supports the handlebar.

Since, due to safety reasons, preference is given to devices that anchor the seat to the frame rather than to the handlebar, only this preferred type of device will be considered in the following description of the background art.

More particularly, known fixing devices are constituted by two metal or plastics plates, which are arranged on opposite sides with respect to the vertical tubular element of the frame and are mutually fastened by way of threaded elements so as to lock their position with respect to such frame.

Each plate has a curved surface that is adapted to rest on a corresponding portion of the vertical tubular element of the frame, in order to ensure a large surface of contact so as to improve its grip.

The seat is then fixed, by means of a corresponding supporting fork, to one of the two plates, generally to the one arranged in the front part of the vertical tubular element.

These known fixing devices are not free from drawbacks, which include the fact that they are scarcely flexible, since they allow application only to a limited type of frame, thus limiting their field of use.

The use of known fixing devices is in fact limited only to frames that have, at their vertical tubular element, a fixing region that is large enough to allow to accommodate the corresponding plates. Moreover, such fixing region must be at a suitable height in order to allow correct fixing of the seat to one of the plates. If the plates are arranged too low, the fork that supports the seat in fact might not reach the corresponding plate, whereas if they are arranged too high, the seat might be in such a position as to reduce the view of the driver and the balance of the vehicle.

Therefore, known fixing devices can be applied only to a limited range of frames and in particular cannot be applied to recently built frames characterized by particular shapes, for example with two tubular elements that are incident to the vertical tubular element, i.e., lacking a fixing region that is large enough to allow the positioning of the plates.

Another drawback of known fixing devices is that the plates that constitute them can be applied only to vertical tubular elements that have a substantially constant and circular cross-section.

If the cross-section of such vertical tubular element is irregular and/or noncircular, the curved surfaces of the plates that are designed to rest against such vertical tubular element would not ensure a sufficiently safe and stable coupling due to the limited contact surface.

WO 01/32498 discloses a fastening device for luggage carrier/child seat on a bicycle. The device disclosed by WO 01/32498 comprises a body that can be associated to a first vertical tubular element of a bicycle frame by means of on or more U-shaped clamps. The device is provided with removable means for fastening the clamps to the body to lock the body with respect to the frame. The clamps have a wire-like shape.

WO 2007/111497 discloses a bicycle child seat mounting assembly. The mounting assembly disclosed by WO 2007/111497 comprises a main body that can be associated to a vertical first tubular element and two clamping members that are suitable to surround, respectively, the first tubular element and a second tubular element that is incident the first tubular element, in order to lock the main body to the bicycle frame.

The aim of the present invention is to eliminate the above-mentioned drawbacks of the background art, by providing a device for fixing a child seat to the frame of a two-wheeled vehicle that can be applied to any type of frame, regardless of its shape and dimensions.

Within this aim, an object of the present invention is to provide a fixing device that is characterized by broad flexibility in operation allowing correct and safe positioning of the seat on the vehicle.

Another object of the present invention is to allow safe fixing of the seat to the frame regardless of the cross-section and shape of the vertical tubular element of such frame.

Another object of the present invention is to provide a fixing device that is simple, relatively easy to provide in practice, safe in use, effective in operation, and of relatively low cost.

Further characteristics and advantages of the present invention will become better apparent from the following detailed description of a preferred but not exclusive embodiment of a device for fixing a child seat to the frame of a two-wheeled vehicle or the like, illustrated by way of nonlimiting example in the accompanying drawings, wherein:

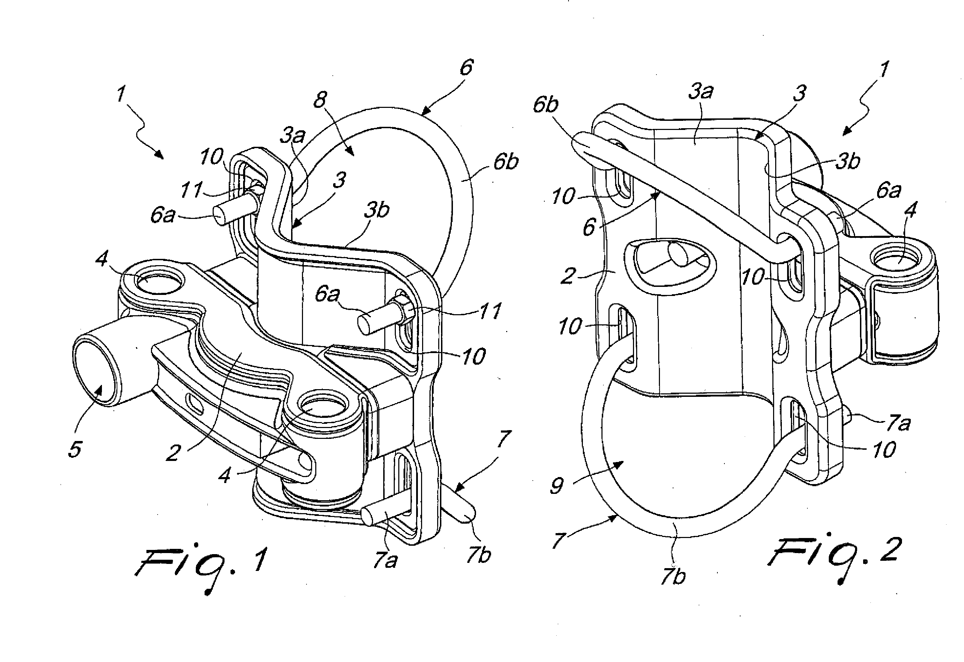

Figure 1 is a first perspective view of the device according to the invention;
Figure 2 is a second perspective view of the device of Figure 1;

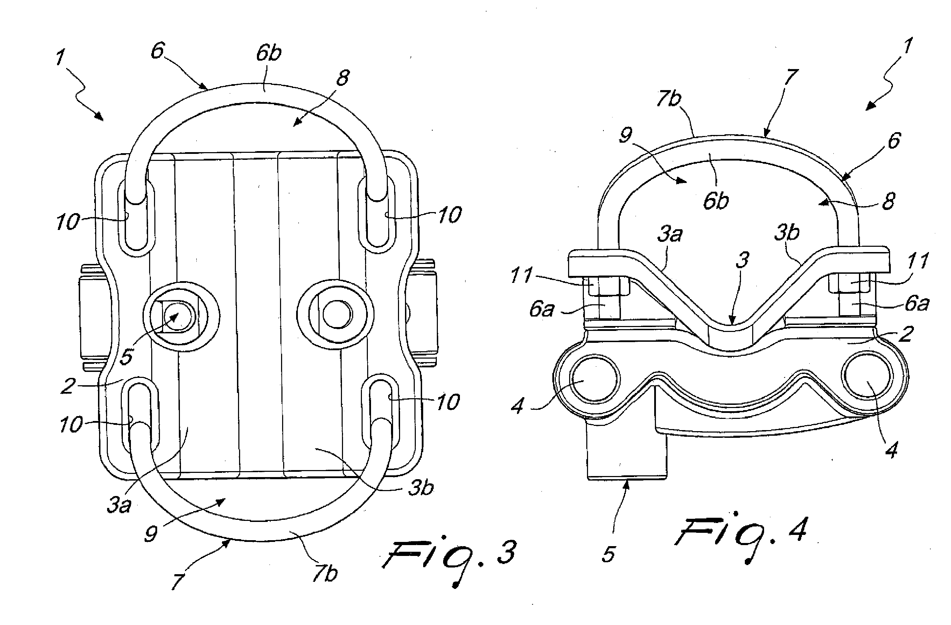

Figure 3 is a rear elevation view of the device of Figure 1;
Figure 4 is a top view of the device of Figure 1;
Figure 5 is a side elevation view of the device of Figure 1, mounted on the frame of a two-wheeled vehicle, which is shown only partially.

With reference to the figures, the reference numeral 1 generally designates a device for fixing a child seat to a frame T of a two-wheeled vehicle or the like.

The device 1 comprises a plate 2, which can be associated with the frame T, which has at least one first tubular element T1 that is substantially vertical (during the use of such vehicle) and is adapted to support a child seat, not shown in the figures.

Advantageously, the plate 2 forms a concave region 3 that is designed to make contact with the first tubular element T1.

More particularly, the concave region 3 comprises a first wall and a second wall, respectively 3a and 3b, which are mutually inclined so as to form a substantially V-shaped profile and are designed to make contact with the first tubular element T1.

As shown in the figures, the plate 2 further has two seats 4 for accommodating the ends of the supporting fork of a child seat, which is not shown in the figures. The plate 2 further comprises a device 5 for locking/releasing the supporting fork of the seat, which is of a known type for the person skilled in the art.

The device 1 further comprises at least one fixing element 6, 7, which forms a substantially open profile that can be associated with the plate 2 in order to define a region 8, 9 for accommodating the first tubular element T1, said region being interposed between the fixing element 6, 7 and the plate 2. The device 1 further provides for the presence of removable means for fastening the fixing element 6, 7 to the plate 2 in order to lock the plate 2 with respect to the frame T.

According to the invention, the fixing element 6, 7 has at least one substantially wire-like portion at the accommodation region 8, 9.

The term "wire-like" references an elongated element in which the dimensions that characterize its cross-section are significantly smaller than its length. Preferably, the fixing element 6, 7 has a substantially wire-like configuration along its entire longitudinal extension.

Conveniently, the cross-section of the fixing element 6, 7 is substantially circular.

Advantageously, the fixing element 6, 7 forms a contact region that is designed to contact in an upper region or in a lower region at least one second tubular element T2 of the frame T that is incident to the first tubular element T1.

The orientation of the upper or lower contact between the contact regions of the fixing element 6, 7 and the frame T has been considered with the two-wheeled vehicle in a substantially vertical position, i.e., standing with its wheels on a reference plane that is not shown in the figures.

More particularly, the fixing element 6, 7 is substantially C-shaped and has two first substantially straight portions 6a, 7a, which protrude from the respective ends and a second substantially curvilinear portion 6b, 7b, which connects the first portions 6a, 7a and forms the corresponding contact region.

Preferably, the first portions 6a, 7a belong to a first plane of arrangement and the second portion 6b, 7b belongs to a second plane of arrangement that is inclined with respect to the first plane of arrangement.

In a preferred embodiment, the device 1 comprises two fixing elements, respectively the first fixing element 6 and the second fixing element 7.

More particularly, the fixing elements 6 and 7 can be associated with the plate 2 in order to form respectively a first accommodation region 8 and a second accommodation region 9 for the first tubular element T1, said regions being interposed between the plate 2 and the corresponding fixing element 6, 7.

At least one of the fixing elements 6, 7, preferably both, is substantially C-shaped and has two corresponding first portions 6a, 7a and the corresponding second portion 6b, 7b.

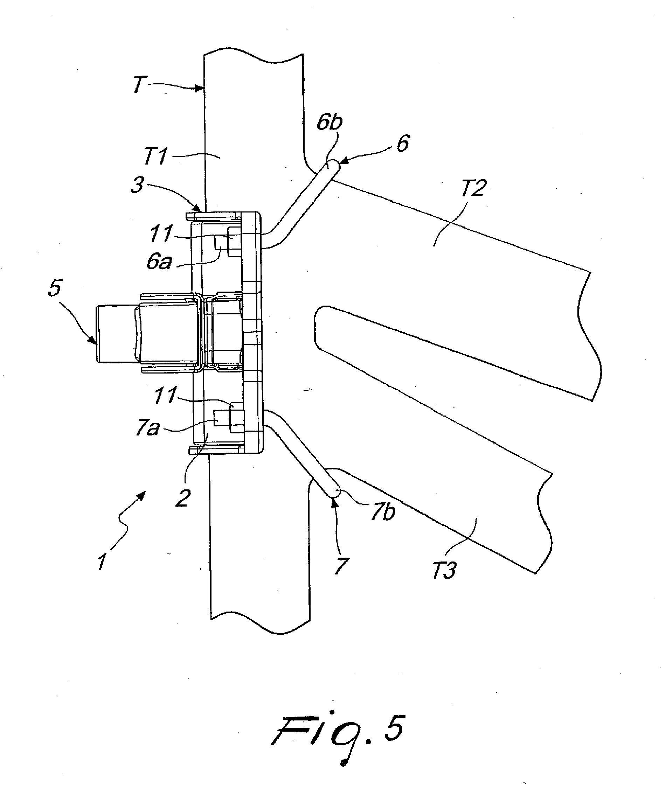

In the embodiment shown in Figure 5, the first and second fixing elements 6 and 7 have corresponding contact regions that make contact, respectively, with the upper part of the second tubular element T2 and the lower part of a third tubular element T3, which also is incident to the first tubular element T1, proximate to the corresponding regions for connection to the first tubular element T1.

In this embodiment, the action of the fastening means thus makes the fixing elements 6 and 7 apply to the frame T a pair of forces that mutually converge and are adapted to ensure the fixing of the plate 2 to the frame T.

In an alternative embodiment, not shown in the figures, each one of the fixing elements 6 and 7 forms a respective contact region designed to make contact, in an upper region, respectively with the second tubular element T2 and with the third tubular element T3.

In this embodiment, the locking of the plate 2 with respect to the frame T is further ensured by the contact, by gravity, of the fixing elements 6 and 7 respectively on the second and third tubular elements T2 and T3.

The fixing elements 6 and 7 can thus be oriented with respect to the plate 2 according to the particular requirements of the situation, i.e., depending on the particular shape of the frame T, so as to ensure locking of the plate 2 to the frame T in the safest possible manner.

Preferably, the device 1 comprises means for adjusting the position of the fixing element 6, 7 with respect to the plate 2.

More particularly, the adjustment means comprise at least a pair of elongated slots 10, which are formed on the plate 2 and in which it is possible to insert the ends of the fixing element 6, 7, and comprise detachable means for locking such ends on the plate 2, which can be arranged along the slots 10.

Advantageously, the means for locking the ends of the fixing element 6, 7 with respect to the plate 2 coincide with the means for fastening the corresponding fixing elements to the plate 2.

More particularly, the fastening means are constituted by threaded elements 11 of a known type for the person skilled in the art, which engage the ends of the fixing element 6, 7 on the opposite side of the plate 2 with respect to the region 8, 9 for accommodating the first tubular element T1.

The means for fastening the fixing element 6, 7 to the plate 2 are therefore simplified significantly with respect to known fixing devices, since they are partially integrated within the fixing element itself, the end part of the first portions 6a, 7a being threaded.

Preferably, the slots 10 lie along an adjustment direction that is oriented so as to be substantially parallel, with the plate 2 rested on the first tubular element T1, to the longitudinal extension of the first tubular element T1.

The arrangement of the threaded elements 11 along the slots 10 thus allows to adjust the position of the fixing element 6, 7 with respect to the frame T and more particularly with respect to its tubular elements that are incident to the first tubular element T1, so as to ensure safe fixing of the plate 2 regardless of the shape of the frame T.

In the embodiment that comprises a first fixing element 6 and a second fixing element 7, as shown in the figures, the adjustment means comprise a first pair of slots 10 and a second pair of slots 10, within which it is possible to insert respectively the ends of the first fixing element 6 and the ends of the second fixing element 7. In this preferred embodiment, the removable locking means comprise first and second means for locking respectively the ends of the first and second fixing elements 6 and 7 to the plate 2.

The operation of the present invention is as follows.

After placing the plate 2 so that it rests with the walls 3 a and 3b against the first tubular element T1, the fixing elements 6 and 7 are positioned with respect to the plate 2.

More particularly, each fixing element 6, 7 is oriented with respect to the plate 2 and is arranged along the corresponding slots 10, depending on the shape of the frame T, so that the corresponding second portions 6b and 7b can enter the free regions of the frame T and so that the corresponding contact regions make contact, in an upper or lower region, with the second and third tubular elements T2 and T3.

The fixing elements 6 and 7 are then locked in the corresponding positions by means of the corresponding threaded elements 11.

The progressive tightening of the threaded elements 11 entails a reduction of the extent of the accommodation regions 8 and 9 and therefore an increase in the adhesion of the plate 2 to the first tubular element T1 due to the higher pressure applied by the fixing elements 6 and 7 to the frame T.

Of course, it is straightforwardly intuitive that the device 1 can be easily disassembled from the frame T and applied to a different vehicle by performing again the operations described above, i.e., by repositioning the fixing elements 6 and 7 with respect to the plate 2.

Further, if required by the particular shape of the frame of the new vehicle, it is possible to replace the fixing elements used previously with other ones that are characterized by a different shape but are also substantially wire-like, which can optionally be sold separately.

In practice it has been found that the described invention achieves the proposed aim and objects, and in particular the fact is stressed that the particular shape of the fixing elements allows their easy application to any type of two-wheeled vehicle, regardless of the particular shape of the corresponding frame, at the same time ensuring safe and reliable support of the seat.

The device according to the invention is therefore characterized by high flexibility in use.

The invention thus conceived is susceptible of numerous modifications and variations, all of which are within the scope of the appended claims.

All the details may further be replaced with other technically equivalent elements.

In practice, the materials used and the contingent dimensions may be any according to requirements without thereby abandoning the scope of protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device (1) for fixing a child seat to the frame (T) of a two-wheeled vehicle or the like, said frame (T) having at least one first substantially vertical tubular element (T1), comprising:
- a plate (2) that can be associated with said first tubular element (T1) and is adapted to support a child seat;
- at least one fixing element (6, 7), which forms a substantially open profile that can be associated with said plate (2) in order to form a region for accommodating (8, 9) said first tubular element (T1) which is interposed between said fixing element (6, 7) and said plate (2), removable fastening means being provided for fastening said fixing element (6, 7) to said plate (2) to lock said plate (2) with respect to said frame (T); said fixing element (6, 7) having at least one substantially wire-like portion at said accommodation region (8,9),
**characterized in that** it comprises means for adjusting the position of said fixing element (6, 7) with respect to said plate (2).

2. The device according to claim 1, **characterized in that** said fixing element (6, 7) forms at least one contact region that is designed to make contact, in an upper or lower region, with at least one second tubular element (T2) of said frame (T) that is incident to said first tubular element (T1).

3. The device according to claim 2, **characterized in that** said fixing element (6, 7) has a pair of first substantially straight portions (6a, 7a) that extend from the respective ends and a second substantially curvilinear portion (6b, 7b) that connects said first portions (6a, 7a) and defines said contact region.

4. The device according to claim 3, **characterized in that** said first portions (6a, 7a) belong to a first plane of arrangement and said second portion (6b, 7b) belongs to a second plane of arrangement that is inclined with respect to said first plane of arrangement.

5. The device (1) according to one or more of the preceding claims, **characterized in that** said adjustment means comprise at least one pair of elongated slots (10) formed in said plate (2), the ends of said fixing element (6, 7) being insertable in said slots (10), removable locking means for locking said ends on said plate (2) being provided which can be positioned along said slots (10).

6. The device (1) according to claim 5, **characterized in that** said slots (10) lie along an adjustment direction that is substantially parallel, when said plate (2) rests against said first tubular element (T1), to the longitudinal extension of said first tubular element (T1).

7. The device (1) according to claim 5 or 6, **characterized in that** said locking means coincide with said fastening means.

8. The device (1) according to one or more of the preceding claims, **characterized in that** it comprises at least two of said fixing elements (6, 7), respectively a first fixing element (6) and a second fixing element (7).

9. The device (1) according to one or more of the preceding claims, **characterized in that** said plate (2) forms a concave portion (3) designed to make contact with said first tubular element (T1).

10. The device (1) according to claim 9, **characterized in that** said concave portion (3) comprises a first wall (3a) and a second wall (3b), which are mutually inclined so as to form a substantially V-shaped profile and are designed to make contact with said first tubular element (T1).
